# EUROPÄISCHE PATENTSCHRIFT

(11) **EP 0 643 515 B1**
(45) Veröffentlichungstag und Bekanntmachung des Hinweises auf die Patenterteilung: **13.06.2001**
(21) Anmeldenummer: 94112078.4
(22) Anmeldetag: 03.08.1994
(51) Int. Cl.: H04L 12/40, H04L 12/10, H04L 29/14

(54) **Anordnung zur bidirektionalen Datenübertragung**
Arrangement for bidirectional transmission of data
Dispositif pour la transmission bidirectionnelle de données

(30) Priorität: 12.08.1993 DE 4327035
(43) Veröffentlichungstag der Anmeldung: 15.03.1995
(73) Patentinhaber: DaimlerChrysler AG, 70567 Stuttgart (DE)
(72) Erfinder: Haun, Roland, D-71404 Korb (DE); Rall, Bernhard, D-89075 Ulm (DE)
(74) Vertreter: Weiss, Klaus

(56) Entgegenhaltungen:
- EP-A- 0 427 921
- EP-A- 0 527 076
- DE-A- 3 901 589
- ELEKTRONIK, Bd. 40, Nr. 17, 20.August 1991, Seiten 96-101, XP000260942 PEHRS J U ET AL: "CAN - DAS SICHERE BUSKONZEPT"

## Beschreibung

Die Erfindung betrifft eine Anordnung zur bidirektionalen Datenübertragung nach dem Oberbegriff des Patentanspruchs 1.

Derartige Anordnungen sind beispielsweise eingesetzt in Zweidraht-Bus-Systemen wie dem CAN (Controller Area Network)-System in Kraftfahrzeugen. Bei einem solchen BUS-System sind Laststromkreise und Sendestufen-Stromkreise angeschlossener Teilnehmerbausteine vorhanden, welche die Spannungspegel auf den Datenleitungen bei den vorgesehenen rezessiven und dominanten Bitzuständen bestimmen. Wie in der Zeitschrift Elektronik, Bd. 40, Nr. 17, vom 20. August 1991, Seiten 96-101, Pehrs et al: "CAN - Das sichere Buskonzept" dargestellt, ist bei solchen BUS-Systemen auch als Notbehelf für einige Störungsfälle ein EindrahtBetrieb möglich, bei welchem in den Empfängerstufen der Teilnehmerbausteine nur die Spannung einer der beiden Datenleitungen ausgewertet und an den für die andere Datenleitung vorgesehenen Empfängereingang eine konstante Spannung angelegt wird.

Die DE 39 01 589 A1 zeigt die Ankopplung eines Busteilnehmers über eine Anordnung, die Laststromkreise aufweist, bspw. dort in Fig. 2 von VCC über T2, D1 und R3 auf die Übertragungsleitung B0. Der zweite zur Übertragungsleitung B1 gehörende Laststromkreis verläuft über R4, D2 und T1 zur Masse. Es sind auch Einrichtungen zur Umschaltung von Betriebsmodi und Mittel zur Auftrennung der Laststromkreise vorgesehen, so dass bei Störungen die Übertragungssignale der gestörten Datenleitung nicht ausgewertet werden. Allerdings kann in solchen Störfällen eine erhebliche Verlustleistung auftreten, insbesondere bei Aufbau des Systems nach der ISO/WD 119 92-1 der ISO (International Organisation of Standards).

Die Aufgabe der vorliegenden Erfindung ist es, eine Anordnung zur bidirektionalen Datenübertragung in einem Zweidraht-Bussystem anzugeben, welche die Fähigkeit zum Eindrahtbetrieb besitzt und in Störfällen ohne die hohen Verlustleistungen bekannter Anordnungen auskommt.

Diese Aufgabe wird durch die Merkmale des Anspruchs 1 gelöst. Danach weisen die Mittel zur Auftrennung jeder Übertragungsleitung einen Schalter zur Masse und einen weiteren Schalter zur Versorgungsspannung auf, bei Eindraht-Störungen ist die nicht benötigte Übertragungsleitung durch Auftrennen beider zugehörender Schalter sowohl von der Masseleitung als auch von der Versorgungsleitung trennbar und für die Steuerung der Umschaltung der Betriebsmodi und für die Steuerung der Mittel zur Auftrennung der Stromkreise werden dieselben Steuersignale benutzt.

Bei einer vorteilhaften Weiterbildung der vorliegenden Erfindung sind zwischen die Datenleitungen und die Empfangseingänge angeschlossener Teilnehemerbausteine Komparatorstufen eingefügt, wobei mehrere Vergleicher als Empfangsdetektoren für verschiedene Betriebsmodi vorhanden sind und die Umschaltung der Betriebsmodi durch Umschalten der Ausgänge der Detektoren erfolgt. Außerdem ist eine Bus-Leitung als vieradriges Kabel mit sternförmiger Anordnung der Adern ausgeführt, bei welcher zwei gegenüberliegende Adern die Datenleitungen bilden und die beiden anderen Adern auf Bezugspotential liegen. Dabei sind die Anschlußleitungen angeschlossener Teilnehmerbausteine über eine Symmetrierdrossel mit zwei getrennten Wicklungen und je einer in Reihe dazu liegenden Dämpfungsperle geführt.

Die Unteransprüche enthalten vorteilhafte Ausgestaltungen und Weiterbildungen der Erfindung. Die Erfindung ist nachfolgend anhand von Ausführungsbeispielen unter Bezugnahme auf die Abbildungen noch weiter veranschaulicht. Dabei zeigt
- FIG. 1A: eine vereinfacht dargestellte Grundschaltung der erfindungsgemäßen Anordnung mit einer Teilnehmerstufe eines Teilnehmerbausteins
- FIG. 1B: die bei einer solchen Schaltung auf den Datenleitungen auftretenden Spannungen mit Bitwechseln
- FIG. 2: eine Zweidraht-BUS-System mit den aus dem Stand der Technik bekannten, möglichen Störungen.
- FIG. 3: die Möglichkeit der Umschaltung von Betriebszuständen im Störungsfall
- FIG. 4: eine Schaltung der in FIG 1 skizzierten Art mit Mitteln zur Auftrennung von Stromkreisen
- FIG. 5: eine Weiterbildung der Schaltung nach FIG. 4
- FIG. 6: eine vorteilhafte Ausführung eines Empfangszuges
- FIG. 7: die Anschaltung eines Teilnehmerbausteins an ein BUS-Kabel
- FIG. 8: eine Anordnung mit mehreren Empfangskomparatoren

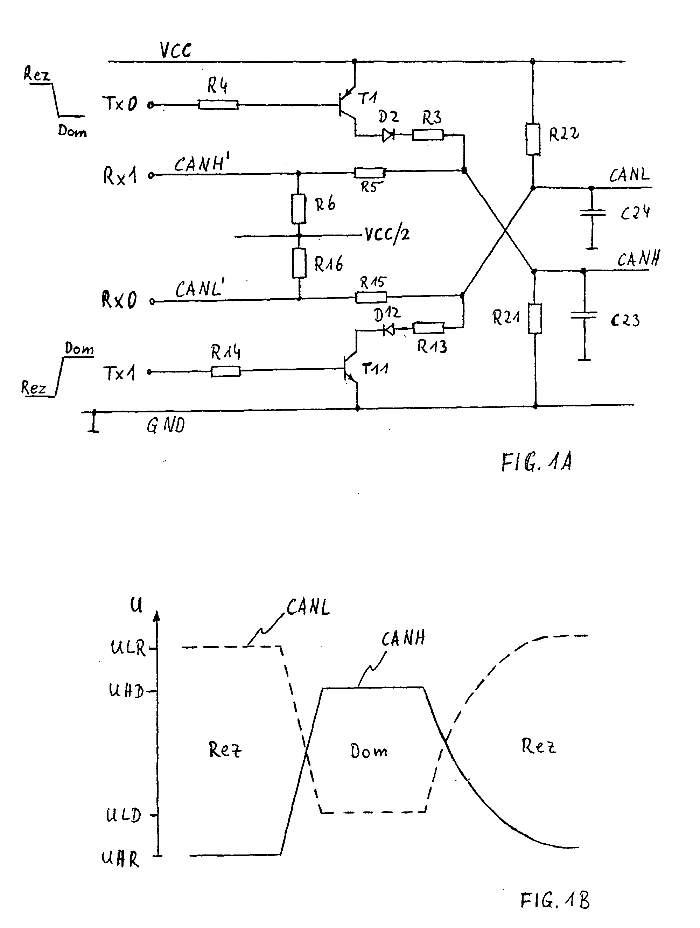

In FIG. 1A ist eine Grundschaltung für den Anschluß eines Teilnehmerbausteins an eine Zweidraht-BUS-Leitung eines CAN-Systems skizziert. Auf den prinzipiellen Aufbau der skizzierten Grundschaltung wird im folgenden Bezug genommen, ohne daß die Erfindung einen solchen Aufbau voraussetzt. Vielmehr ist die Erfindung auf von anderen vergleichbaren BUS-Systemen bekannte Schaltungen in entsprechender Weise anwendbar.

Der Teilnehmerbaustein sei aus einer eigenen, vorzugsweise auch für ein zugehöriges elektronisches Steuergerät verwendeten, stabilisierten Stromversorgung gespeist, deren Betriebspotentiale mit VCC und GND bezeichnet sind. Die Betriebsspannung von VCC gegen GND beträgt typischerweise 5 Volt. Das BUS-System mit Datenleitungen CANH und CANL sei ebenfalls nur aus der oder den Stromversorgungen der Teilnehmerbausteine gespeist und somit insbesondere getrennt von dem stark störungsbehafteten Bordnetz eines Fahrzeuges betrieben. Die Bitzustände der Datenübertragung umfassen einen rezessiven Bitzustand Rez und einen dominanten Bitzustand Dom, womit auf einfache Weise eine Prioritätenselektion unter mehreren sendewilligen Teilnehmern durch sogenannte Arbitration möglich ist. Ein nicht eingezeichneter Controller-Baustein eines an der Kommunikation beteiligten Teilnehmers stellt im Sendefall an den Anschlüssen TxO und Tx1 ein Sendesignal bereit und übernimmt an Anschlüssen RxO und Rx1 Empfangssignale zur Detektion und Auswertung. Durch Überwachung der aus den Spannungen der Datenleitungen abgeleiteten Empfangsspannungen CANH' und CANL' bei gleichzeitiger Abgabe eines Sendesignals kann der Controller sowohl Störungen der Datenleitungen als auch den Sendewunsch eines prioritätshöheren Teilnehmers erkennen und sein eigenes Verhalten danach ausrichten. Insbesondere wird bei Erkennen eines prioritätshöheren Sendewunsches der eigene Sendevorgang abgebrochen. Im Störungsfall wird der Controller versuchen, durch Wechsel in einen Eindraht-Betriebszustand die Kommunikationsfähigkeit behelfsweise aufrechtzuerhalten oder, falls dies nicht möglich ist, die Teilnahme an der Kommunikation abbrechen. Im Regelfall wird der Controller nach einer vorgebbaren Zeit versuchen, die Kommunikation im regulären Betriebszustand wieder aufzunehmen.

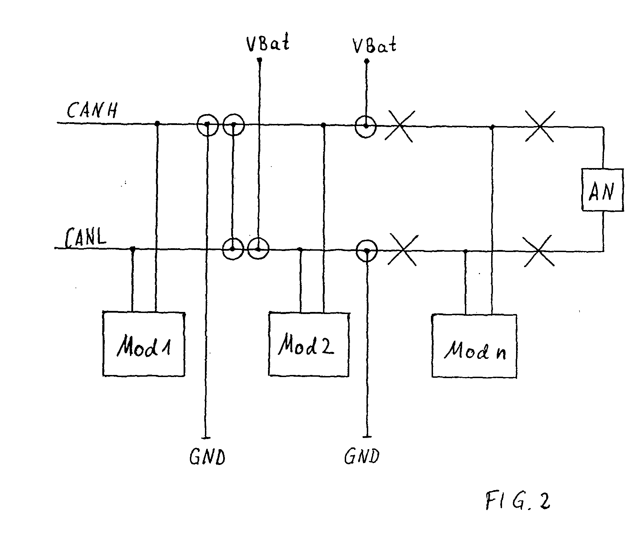

Bei der in FIG. 1 skizzierten Grundschaltung sind für ein rezessives Bit des Sendesignals die Transistoren T1 und T11 der Treiberstufe des Teilnehmerbausteins gesperrt und die Spannungspegel auf den Datenleitungen CANH und CANL sind durch die Lastwiderstände R21 und R22 sowie ggf. eine Anpassungsimpedanz AN zwischen den Datenleitungen wie in FIG. 2 skizziert bestimmt. Ohne eine solche Anpassungimpedanz werden die BUS-Leitungspegel im rezessiven Zustand annähernd auf den Betriebspotentialen VCC und GND gehalten, da die Widerstände R5, R6, R15 und R16 im Empfangszweig im Regelfall hochohmig gegenüber R21, R22 ausgeführt sind. Die Widerstände R21, R22 sind vorzugsweise nur einmal im BUS-System vorhanden, beispielsweise bei einem als Master arbeitenden Systemteilnehmer. Die Dimensionierung der Widerstände R21, R22 wird unter Berücksichtigung der Kabelkapazitäten C23, C24 und der Bitdauer der Datenübertragung vorgenommen. Während des rezessiven Bitzustands auf den Datenleitungen fließt daher kein nennenswerter Strom.

Der dominante Bitzustand Dom wird durch gleichzeitiges Einschalten der Transistoren T1 und T11 der Treiberstufe mittels des Sendesignals hergestellt. Im dominanten Bitzustand fließt ein Sendestrom jeweils durch T1, D2, R3 und R21 sowie durch R22, R13, D12 und T11. Die BUS-Leitungspegel sind in diesem Fall durch den Spannungsabfall an T1, D2 bzw. T11, D12 und die Spannungsteiler R3, R21 bzw. R22, R13 bestimmt. Im Regelfall werden die Widerstandswerte für R3, R13 wesentlich kleiner gewählt als die für R21, R22, beispielsweise 30Ω gegenüber 240Ω. Der Verlauf der resultierenden Spannungen auf den Datenleitungen CANH, CANL ist in FIG. 1B für einen zweifachen Bitwechsel Rez-Dom-Rez skizziert, wobei mit ULR und ULD die Spannung der Leitung CANL, mit UHR und UHD die der Leitung CANH im rezessiven bzw. dominanten Bitzustand jeweils gegen GND bezeichnet sind. Dabei ist UHR annähernd gleich Null und ULR ungefähr gleich der Betriebsspannung.

Die in FIG. 1 eingezeichneten Dioden D2, D12 berücksichtigen den Umstand, daß mehrere Sendetreiberstufen gleichzeitig aktiv sein können. Die Widerstände R4, R14 dienen als Vorwiderstände in den Ansteuerleitungen der Transistoren T1, T11. Die Basisanschlüsse dieser Transistoren können in bekannter Weise noch über Ableitwiderstände mit den jeweiligen Emitteranschlüssen verbunden sein. In den Empfangszügen zwischen den BUS-Leitungen CANH, CANL und den Empfängereingangsanschlüssen Rxl, Rx0 des Controller-Bausteins bilden die Widerstände R5, R6 bzw. R15, R16 Spannungsteiler, welche aus den Spannungen der BUS-Leitungen die Empfangsspannungen CANH', CANL'an den Eingängen Rxl, Rxo eines Komparators ableiten. Der Komparator interpretiert CANH'>CANL'als dominanten, CANH'<CANL'als rezessiven Bitzustand.

Das Teilerverhältnis dieser Spannungsteiler liegt beispielsweise bei 10:1 und gewährleistet, daß auch bei einem Gleichspannungsversatz der Betriebsspannungen der Gleichtaktaussteuerbereich des Komparators nicht überschritten wird. Die Empfangszüge liegen vorzugsweise symmetrisch zu einem Referenzpotential bei VCC/2. Die gesamte Schaltung ist mit Rücksicht auf EMV-Probleme weitgehend symmetrisch zum Potential VCC/2 aufgebaut, d.h. alle für CANH bestimmten Elemente sind komplementär auch für CANL vorhanden. Weitere Ausgestaltungen der skizzierten Grundschaltung und vergleichbarer Schaltungen sind dem Fachmann geläufig.

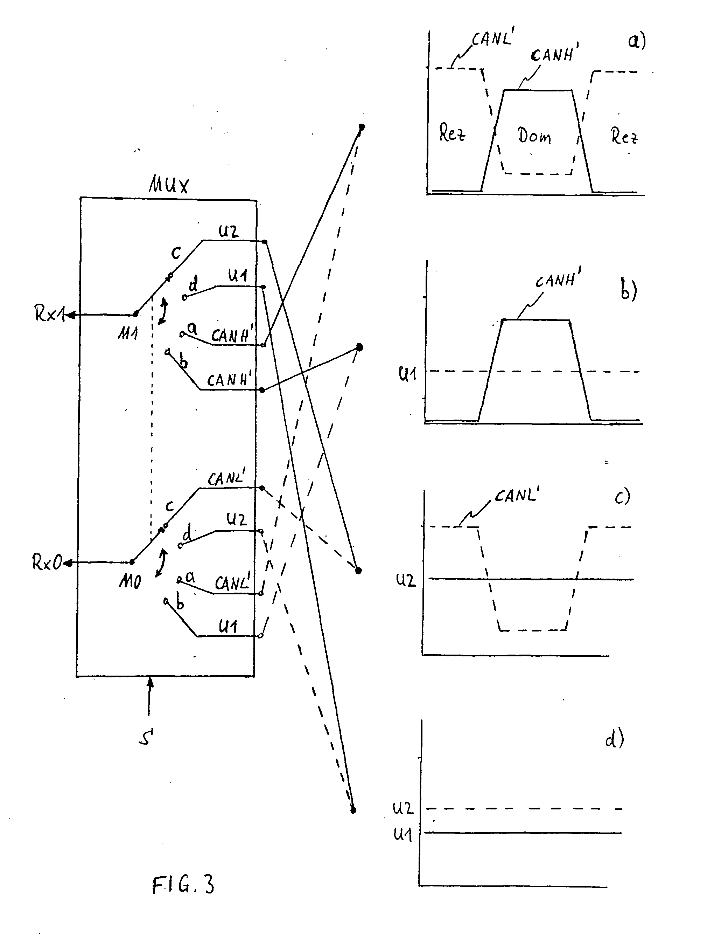

Die an ein derartiges BUS-System in einem Fahrzeug angeschlossenen Teilnehmer sind i.a. über das ganze Fahrzeug verteilt angeordnet. Dabei sind eine Reihe möglicher Störungen zu berücksichtigen. In FIG. 2 sind die wesentlichsten Störungen in Form von Leitungsunterbrechungen (Kreuze) oder Kurzschlüssen (eingekreiste Verbindungspunkte) zwischen den Datenleitungen untereinander oder gegen die Potentiall VBat bzw. GND des Bordspannungsnetzes eingetragen. Bei Zweidraht-BUS-Systemen ist es möglich, bei einem Teil dieser Störungen die Kommunikationsfähigkeit des Systems durch Wechsel in einem Eindraht-Betriebsmodus aufrechtzuerhalten. In FIG. 3 sind rechts die vier vorgesehenen Betriebsmodi a) bis d) als Verlauf der an den Eingängen RxO, Rx1 des Empfangskomparators anliegenden Spannungen bei doppeltem Bitwechsel wie in FIG. 1B skizziert. Dabei ist jeweils die an Rx1 anliegende Spannung mit durchgezogener Linie, die an RxO anliegende Spannung mit unterbrochener Linie eingetragen.

Im regulären ungestörten Modus a) bilden die Empfangsspannungen CANH', CANL'auch die Eingangsspannungen des Komparators. Im Eindraht-Betriebsmodus b) ist an den Eingang RxO des Komparators die konstante Spannung U1 angelegt als Ersatz für die Empfangsspannung der gestörten Leitung CANL. Am anderen Eingang liegt die Empfangsspannung CANH', die als ungestört angenommen ist. Im anderen Eindraht-Betriebsmodus c) ist die Empfangsspannung CANH'am Komparatoreingang Rx1 durch eine konstante Spannung U2 ersetzt, während an RxO die Empfangsspannung CANL'anliegt. Die Spannungen U1, U2 liegen dabei vorteilhafterweise in der Mitte der Pegelhübe von CANH'bzw. CANL'. In beiden Eindraht-Betriebsmodi ist eine korrekte Detektion der Betriebszustände aus dem Vergleich der Eingangsspannungen des Komparators und damit eine Aufrechterhaltung der Kommunikation möglich. Bei Erkennen einer Störung durch den Controller schaltet dieser vom Modus a) in die anderen Modi weiter und untersucht, ob einer der Eindrahtmodi eine Aufrechterhaltung der Kommunikation erlaubt. Gegebenenfalls hält er an diesem Modus zunächst fest, um nach einer vorgebbaren Zeit eine Rückschaltung in den Modus a) zu versuchen. Erkennt der Controller mehrmals in Folge einen Sendefehler, der beispielsweise durch eine der in Fig. 2 dargestellten Störungen hervorgerufen werden kann, so schaltet er vorübergehend in den Modus d), in welchem auf jeden Empfang verzichtet wird und durch konstante Eingangsspannungen U1 an Rx1 und U2 an RxO mit U2>U1 ein dauernder rezessiver Bitzustand simuliert ist.

Die Umschaltung der Betriebsmodi kann beispielsweise mittels einer Multiplexeranordnung MUX mit zwei 4:1-Multiplexern M1 und MO erfolgen, die durch ein Steuersignal S des Controllers synchron betätigt sind und jeweils eine der Empfangsspannungen oder eine der konstanten Spannungen wie beschrieben auf den jeweiligen Komparatoreingang weiterleiten. Der besondere Vorteil der Multiplexeranordnung ist in der freien Zuordnung der konstanten Spannungen U1, U2 zu RxO und Rx1 zu sehen, wodurch U1 und U2 für größte Störsicherheit gegen Leitungsstörungen ausgelegt werden können.

Bei Störungen der in FIG. 2 eingetragenen Art können insbesondere bei Kurzschlüssen gegen eine Batteriespannung von bis zu 32 Volt erhebliche Verlustleistungen in den Sendestromkreisen und Laststromkreisen der Schaltung nach FIG. 1A auftreten. Durch die gemäß der Erfindung vorgesehenen Mittel zum Auftrennen von Stromkreisen und deren Betätigung nach Maßgabe ermittelter Störungen können diese Verlustleistungen auf einfache Weise vermieden werden. Vorteilhafterweise sind diese Mittel und die Steuerung der Multiplexeranordnung so aufeinander abgestimmt, daß das Steuersignal S als 2-Bit-Signal in Form zweier jeweils zweiwertiger Teilsignale SI, SII gleichzeitig die genannten Mittel und die Multiplexer-Anordnung steuert.

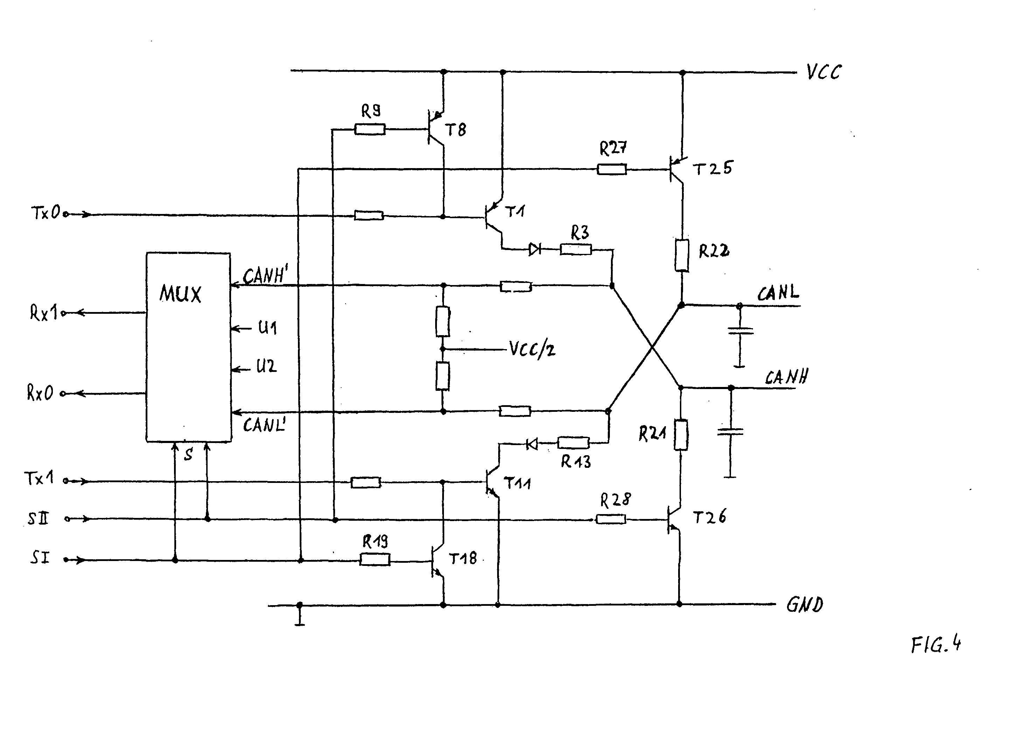

Als Mittel zur Auftrennung der Stromkreise sind in FIG. 4 ausgehend von der in FIG. 1A skizzierten Grundschaltung Transistoren T8, T18, T25 und T26 mit Vorwiderständen R9, R19, R27 und R28 vorgesehen. Die mit FIG. 1A übereinstimmenden Elemente sind nur soweit zur Erläuterung erforderlich mit Bezugszeichen versehen.

Im ungestörten Betriebsmodus a) nach FIG. 3 sind Transistoren T25 und T26 leitend, während T8 und T18 sperren. Hierfür liegt im Steuersignal S unter Berücksichtigung der Transistortypen im skizzierten Fall beispielsweise SI auf GND und SII auf VCC. Damit sind die Laststromkreise über R22 und R21 geschlossen und die Betätigung der Sendetreiberstufen mit Transistoren T1, T11 ungehindert. Im Eindrahtmodus b) nach FIG. 3 wird die von der Leitung CANL abgeleitete Empfangsspannung nicht ausgewertet und die Leitung CANL daher zur Datenübertragung nicht benötigt. Bei der Steuerung der als Auftrennmittel vorgesehenen Transistoren ist dieser Eindrahtmodus dadurch berücksichtigt, daß das Teilsignal SI auf VCC umgeschaltet ist. Dadurch sperrt T25 den Laststromkreis über R22 und der jetzt leitende T18 verhindert die Aussteuerung des Treibertransistors T11 durch das Sendesignal an Tx1 und trennt dadurch den Sendestromkreis über T11 auf. Hiermit tritt selbst für einen Kurzschluß von CANL gegen die Batteriespannung UBat oder gegen das Bezugspotential GND keine Verlustleistung in diesen Stromkreisen auf und die Störung kann ohne Überlastungsgefahr bewältigt werden. In entsprechender Weise wird im Eindrahtmodus c) nach FIG. 3 durch Umschalten des Steuersignals S auf SI=GND, SII=GND die Leitung CANL weiterbetrieben und eine Auftrennung des Laststromkreises über R21 und des Sendestromkreises über Tl bewirkt. Im Betriebsmodus d) schließlich sind mit SI=VCC und SII=GND alle der genannten Stromkreise aufgetrennt. Jedem der vier Betriebsmodi ist somit eine der vier möglichen Steuersignalkombinationen SI/SII eindeutig zugeordnet und die Anschlüsse der Multiplexer-Anordnung können entsprechend beschaltet werden.

Die skizzierte Schaltung ermöglicht den verlustarmen Betrieb auch im Störungsfall unter Weiterverwendung gebräuchlicher Controllerbausteine. An die Stelle der Auftrennung der Sendestromkreise mittels Transistoren T8, T18 kann auch eine Modifikation des Controllers treten, indem dieser betriebsmodusabhängig nur ein oder gar kein Sendesignal an Anschlüssen TxO, Tx1 abgibt.

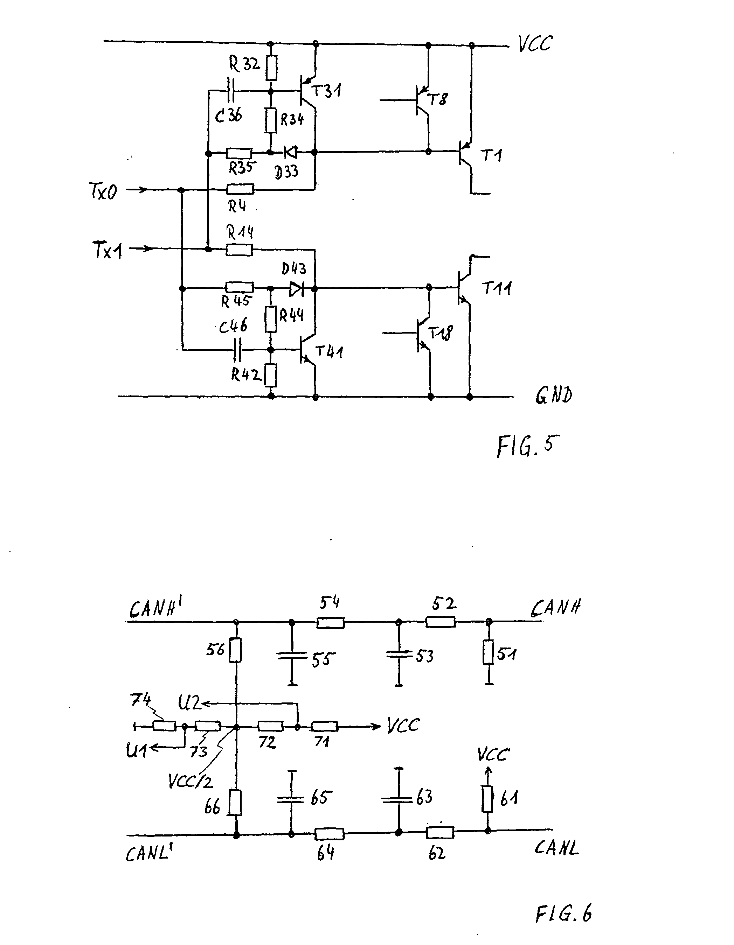

Bipolare Planartransistoren haben im linearen Bereich Transitfrequenzen >100MHz. Im gesättigten Schalterbetrieb sorgt die große Unsymmetrie für hohe Verzögerungszeiten beim Übergang von gesättigten zum gesperrten Betrieb. Andererseits ist das Zweidrahtübertragungssystem empfindlich gegen Überlappungsfehler von CANH und CANL weil dadurch Gleichtaktspannungsimpulse auf die Leitung gelangen, die Radio und andere Elektronik stören, deshalb ist in FIG. 5 eine Weiterbildung der Schaltung nach FIG. 4 mit Mitteln zur schnellen Zwangsentladung für die Treibertransistoren T1 und T11 eingezeichnet.

Angenommen Treibertransistor T11 ist leitend Tx1=VCC, TxO=GND, T41 ist gesperrt. Beim Übergang von dominant auf rezessiv wird TxO=VCC und Tx1=GND. Über den Kondensator C46 wird Transistor T41 schnell leitend und räumt die Basisladung des Treibers T1 in 100-200ns aus (sonst würde es 1-3*µ*s dauern). Damit aber T41 nicht bleibend übersteuert wird und selbst langsam aus der Sättigung läuft, wird über die Diode D43 und den Spannungsteiler R44 und R45 dafür gesorgt, daß die Kollektorspannung von Transistor T41 etwa bei 450-500mV liegt, niedrig genug um T11 zu sperren und hoch genug um die Sättigung von T41 zu vermeiden. Zum schnellen Sperren dieses T41 sorgt wieder der Kondensator C46. Die Wirkungsweise der komplementär hierzu vorhandenen Schaltungselemente ist ohne explizite Darlegung ersichtlich. Mit dieser Schaltung konnten gute EMV-Abstrahlungswerte erreicht werden.

Störungen, die auf die CAN-Leitungen von außen eingekoppelt werden, treten fast immer als Gleichtaktstörungen auf, d.h. auf beiden Leitungen sind die gleichen Störspannungsamplituden den Nutzspannungen überlagert.

Diese Störspannungen können u.U. ein Vielfaches der Nutzspannungen sein und würden den Eingangskomparator in seinem Gleichtaktaussteuerbereich z.B. von +1 bis +4V gegen GND überfahren und zu Übertragungsfehlern führen.

Deswegen sind, wie in FIG. 6 gezeigt, die in FIG. 1 angedeuteten Spannungsteiler 5, 6 und 15, 16 vorteilhafterweise als RC-Filter (51 bis 56, 61 bis 66 ausgeführt. Gleichzeitig ist ein gegenüber den Filterwiderständen niederohmiger Spannungsteiler 71 bis 74) für VCC/2 und U1 bzw. U2 eingezeichnet.

Das zweigliedrige RC-Filter erzielt mit geringem Mehraufwand erhebliche Vorteile gegenüber einem einfachen RC-Filter. Ohne die Impulsform wesentlich gegenüber einem eingliedrigen zu verschlechtern, hat es bei hohen Frequenzen etwa die doppelte Weitabdämpfung in dB. Weil die Gleichtaktspannung gegen Bezugspotential GND gemessen wird und wirkt, müssen die Filterhälften einigermaßen gleich sein, damit die Differenzspannung CANH' gegen CANL' klein wird. Die absolute Größe der Kondensatorpaare 55,65, 63, 53 ist unkritisch. Die Widerstände 51 und 61 dienen an jedem Treiber zur Potentialfestlegung bei unterbrochener Leitung auf den rezessiven Zustand. Sie sind viel größer als R21 und R22. Dieses Filter ist ein wesentlicher Beitrag zur EMV-Festigkeit eines CAN Übertragungssystems.

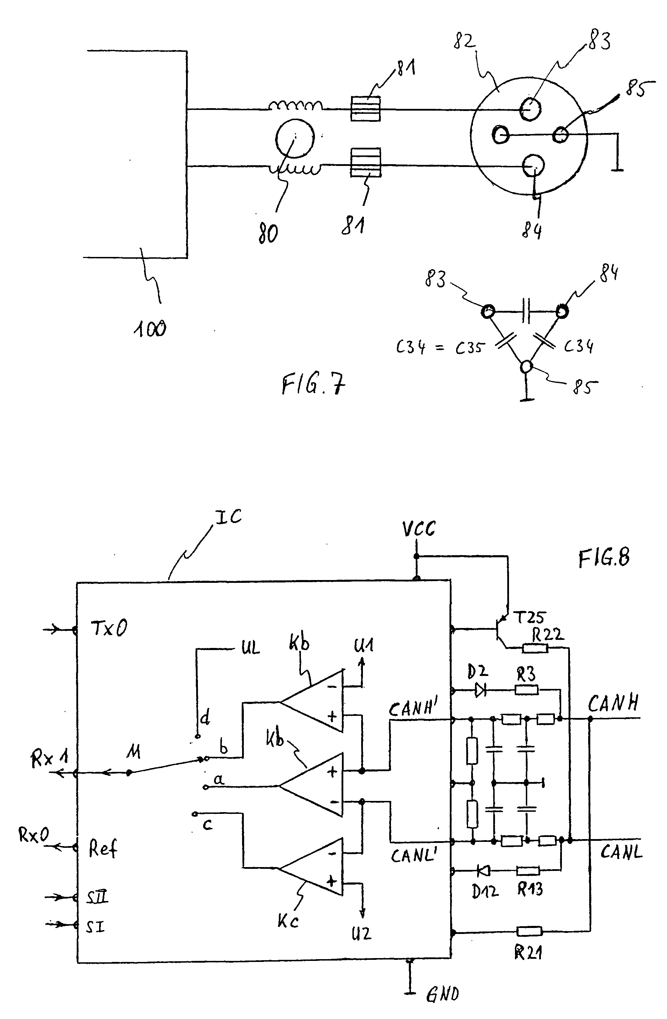

Die in FIG. 7 eingezeichnete Symmetrierdrossel 80 zwischen Treiberstufe 100 und dem Kabel 82 mit Signalleitungen 83, 84 und Masseleitungen 85 wirkt nur im dominanten Zustand von einer niederohmigen Quelle auf das niederohmige Kabel als Dämpfung für Gleichtaktsignale und Gegentaktoberwellen. Die hochohmige Eingangsschaltung im rezessiven (Empfangszustand) läßt keinen Strom fließen und die Drossel bildet keinen Spannungsteiler mehr, weil der Eingangswiderstand des Empfangszuges wesentlich höher ist als der Drosselwiderstand. Damit sich aus der Drossel und der erheblichen Kabelkapazität kein Serienschwingkreis mit Spannungsüberhöhung bildet, ist je eine Dämpfungsperle 81 dazwischen geschaltet, die genügend Dämpfungswiderstand eintransformiert um eine Schwingung zuverlässig zu verhindern.

Das Kabelersatzbild in FIG. 7 ist für Kabel mit sternförmiger Anordnung der Adern bestimmt, das in dieser Beschaltung nahezu die Qualitäten eines geschirmten Kabels hat ohne dessen Nachteile im Preis und in der Konfektionierung zu besitzen.

Durch die erfindungsgemäße Auftrennung von Stromkreisen nach Maßgabe ermittelter Störungen reduziert sich die zu berücksichtigende Verlustleistung in den beteiligten Bauelementen soweit, daß eine weitgehende Integration der in FIG. 4 bis FIG. 6 skizzierten Schaltungen möglich ist. In eine derartige integrierte Schaltung können ohne nennenswerten Mehraufwand mehrere Empfangskomparatoren für verschiedene Betriebsmodi sowie die Multiplexeranordnung aufgenommen werden. Eine solche Anordnung ist in FIG. 8 skizziert. Die Filter, der pnp-Transistor T25, die besonders belasteten Widerstände R3, R13, R21 und R22 sowie die Dioden D2, D12 sind als externe Beschaltung des integrierten Schaltkreises IC realisiert. Als Sendesignal vom Controller-Baustein ist nur eines der komplementären Signale, z.B. TxO vorgesehen. Das hierzu komplementäre Sendesignal Tx1 kann im Baustein IC intern erzeugt werden. Durch die mehreren Empfangskomparatoren werden über die Multiplexeranordnung nur noch digitale Signale weitergegeben. Für die Multiplexeranordnung ist zudem nur noch ein 4:1-Umschalter M erforderlich. Für die drei Betriebsmodi a), b) und c) nach FIG. 3 ist jeweils ein Komparator vorgesehen. Die Eingänge der Komparatoren Ka, Kb, Kc sind mit den sich aus FIG. 3 ergebenden Spannungen fest beaufschlagt. Je nach Betriebsmodus wird einer der Komparatorausgänge auf den Eingangsanschluß Rx1 des Controllers mittels der Multiplexeranordnung weitergeschaltet. Für den Betriebsmodus d) nach FIG. 3 ist kein Komparator erforderlich. In diesem Modus wird lediglich eine konstante Spannung UL entsprechend einem der digitalen Komparatorausgangspegel oder GND weitergeleitet. Das Ausgangssignal des Multiplexers an Rx1 stellt an sich bereits ein demoduliertes Datensignal dar. Zum Betrieb des skizzierten integrierten Bausteins an einen gebräuchlichen Controller mit zwei Kompartoreingängen wird der Eingang RxO des Controllers mit einer konstanten Referenzspannung Ref, z.B. VCC/2 beaufschlagt. Die Ansteuerung des Multiplexers und die Auftrennung von Stromkreisen erfolgt gleichzeitig über das Steuersignal S(SI,SII) wie beschrieben. Zu beachten ist die Entkopplung aller controller-seitigen Anschlüsse von auf der BUS-Seite eingekoppelten HF-Störspannungen und -strömen über 500MHz. Hierfür können u.U. je zweifache Stromversorgungsanschlüsse für VCC und GND vorteilhaft sein.

Wegen der Forderung auch einen Kurzschluß einer der Datenleitungen gegen eine hohe Batteriespannung auszuhalten, wird der Schaltkreis in bipolarer Technologie ausgeführt.

Vorteile der erfindungsgemäßen Anordnung sind insbesondere
- geringer Leistungsverbrauch
- Eindrahtfähigkeit bei einer Vielzahl von Störungen
- geringe Verlustleistung auch bei Leitungsstörungen
- gutes EMV-Verhalten und Störfestigkeit gegen Einstreuungen
- keine gesonderten Filter gegen Bordnetzstörungen erforderlich
- weitgehende Integration möglich.

## Patentansprüche

1. Anordnung zur bidirektionalen Datenübertragung in einem Zweidraht-Bus-System, dessen Übertragungsleitungen (CANH, CANL) über Laststromkreise (R21, R22) und/oder Sendestufen-Stromkreise (R3, R13) angeschlossener Teilnehmerbausteine mit Betriebspotentialen (GND, VCC) verbunden sind, mit Einrichtungen zur Überwachung der Übertragungsleitungen (CANL, CANH) auf Störungen und zur Umschaltung von Betriebsmodi, wobei Mittel zur Auftrennung (T1, T11, T25, T26) der Sendestufen- und/oder Laststromkreise vorhanden sind und diese Mittel (T1, T11, T25, T26) nach Maßgabe ermittelter Störungen so ansteuerbar sind, daß eine im eingeschalteten Betriebsmodus für die Datenübertragung nicht benötigte Übertragungsleitung (CANH und/oder CANL) von Betriebspotentialen (GND, VCC) getrennt ist, **dadurch gekennzeichnet,**
daß die Mittel zur Auftrennung jeder Übertragungsleitung (CANH, CANL) jeweils einen Schalter (T11 bzw. T26) zur Masse und einen weiteren Schalter (T1 bzw. T25) zur Versorgungsspannung (VCC) aufweisen, bei Eindraht-Störungen die nicht benötigte Übertragungsleitung (CANL und/oder CANH) durch Auftrennen beider zugehörender Schalter (T1 und T26 bzw. T11 und T25) sowohl von der Masseleitung (GND) als auch von der Versorgungsleitung (VCC) trennbar ist und daß für die Steuerung der Umschaltung der Betriebsmodi und für die Steuerung der Mittel zur Auftrennung der Stromkreise dieselben Steuersignale (S1, SII) benutzt sind.

2. Anordnung nach Anspruch 1, dadurch gekennzeichnet, daß die Betätigung der genannten Mittel (T1, T11, T25, T26) gleichzeitig mit der Umschaltung von Betriebsmodi erfolgt.

3. Anordnung nach Anspruch 1 oder 2, dadurch gekennzeichnet, daß die Umschaltung der Betriebsmodi mittels einer Multiplexer-Anordnung (MUX, M) erfolgt.

4. Anordnung nach einem der Ansprüche 1 bis 3, gekennzeichnet durch nicht statisch gesättigte Sperrschalttransistoren als Mittel zum Auftrennen von Stromkreisen.

5. Anordnung nach einem der Ansprüche 1 bis 4, gekennzeichnet durch Entkopplungsmittel (51 bis 56, 61 bis 66) zum Dämpfen von auf den Übertragungsleitungen (CANL, CANH) eingekoppelten Störungen.

## Claims

1. An arrangement for bi-directional data transmission in a two wire bus system in which the transmission lines (CANH, CANL) are connected via load circuits (R21, R22) and/or transmission stage circuits (R3, R13) in connected subscriber modules with operating potentials (GND, VCC), with devices for monitoring the transmission lines (CANL, CANH) for faults and to switch between operating modes, with means (T1, T11, T25, T26) of opening the transmission stage and/or load circuits being provided and it being possible to trigger these means (T1, T11, T25, T26) in accordance with any faults detected in such a way that when switched to operating mode a transmission line (CANH and/or CANL) not required for data transmission is isolated from operating voltages (GND, VCC)
**characterised in that**
the means of opening each transmission line (CANH, CANL) have a switch (T11/T26) to earth and a further switch (T1/T25) to the supply voltage (VCC), in the case of single wire faults the transmission line not required (CANH and/or CANL) can be isolated from both the earth wire (GND) and the supply wire (VCC) by opening both appropriate switches (T1 and T26 / T11 and T 25) and that these same control signals (S1, S11) are used to control the switch between operating modes and to control the means of opening the circuits.

2. An arrangement in accordance with Claim 1 characterised in that the actuation of the means specified (T1, T11, T25, T16) takes place at the same time as the switch between operating modes.

3. An arrangement in accordance with Claim 1 or 2 characterised in that the switch between operating modes is effected by means of a multiplexer arrangement (MUX, M).

4. An arrangement in accordance with one of Claims 1 to 3 characterised by non-statically saturated transistors as means of opening circuits.

5. An arrangement in accordance with one of Claims 1 to 4 characterised by decoupling means (50 to 56, 61 to 66) to attenuate faults coupled into the transmission lines (CANL, CANH).

## Revendications

1. Dispositif de transmission bidirectionnelle des données dans un système à bus bifilaire dont les lignes de transmission (CANH, CANL) sont reliées à des potentiels de fonctionnement (GND,VCC), par des circuits de courant de charge (R21, R22) et/ou des circuits électriques d'étages émetteurs (R3, R13) appartenant à des composants abonnés raccordés, avec des dispositifs pour la surveillance des lignes de transmission (CANL, CANH), afin d'apréhender les perturbations et pour commuter entre des modes de fonctionnement, des moyens, pour effectuer la séparation (T1, T11, T25, T26) des circuits d'étages émetteurs et/ou de courant de charge, étant prévus et ces moyens (T1, T11, T25, T26), selon l'indication des perturbations déterminées, étant susceptibles d'être commandés de manière qu'une ligne de transmission (CANH/CA-NL), non nécessaire pour la transmission de données dans le mode de fonctionnement mis en service, soit séparée des potentiels de fonctionnement (GND, VCC)
caractérisé en ce que les moyens de séparation de chaque ligne de transmission (CANH, CANL) présentent respectivement chacun un interrupteur (T11 ou T26) par rapport à la masse et un autre interrupteur (T1 ou T25) par rapport à la tension d'alimentation (VCC), en cas de perturbation en mode monofilaire la ligne de transmission (CANL et/ou CANH) non nécessaire étant susceptible d'être séparée par ouverture de séparation des deux interrupteurs (T1 et T26 ou T11 et T25) afférents, tant vis à vis de la ligne de masse (GND) que la ligne d'alimentation (VCC), et en ce que les mêmes signaux de commande (S1, SII) sont utilisés pour la commande de la commutation des modes de fonctionnements et pour la commande des moyens de séparation des circuits électriques.

2. Dispositif selon la revendication 1, caractérisé en ce que l'actionnement des moyens (T1, T11, T25, T26) cités s'effectue simultanément par rapport à la commutation entre les modes de fonctionnement.

3. Dispositif selon la revendication 1 ou 2, caractérisé en ce que la commutation des modes de fonctionnement s'effectue au moyen d'un dispositif multiplexeur (MUX, M).

4. Dispositif selon l'une des revendications 1 à 3,
caractérisé par des transistors de commutation de blocage, non saturés statiquement, faisant office de moyen de séparation entre les circuits électriques.

5. Dispositif selon l'une des revendications 1 à 4,
caractérisé par des moyens de désaccouplement (51 à 56, 61 à 66) pour l'amortissement de perturbations injectées sur les lignes de transmission (CANL, CANH).
